# EUROPEAN PATENT APPLICATION

(11) **EP 4 398 057 A1**
(43) Date of publication of application: **10.07.2024**
(21) Application number: 23150190.9
(22) Date of filing: 03.01.2023
(51) Int. Cl.: G05B 19/418, G05B 19/402

(54) **METHOD FOR DETERMINING A NUMBER AND A POSITION OF LOCATORS**

(71) Applicant: VOLVO TRUCK CORPORATION, 405 08 Göteborg (SE)
(72) Inventor: Bardiya, Shrikant, 560093 Bengaluru Bangalore (IN); Shetye, Abhijeet, 560093 Bengaluru Karnataka (IN)
(74) Representative: Germain Maureau

(57) **Abstract**

A computer system (100) comprising a processor device (102) implementing a trained artificial neural network (ANN) for determining a target number of locators and a target distance between adjacent locators placed on a part to fix the part on a fixture, the computer system (100) being configured to:
- collect a part (201) associated with part parameters (PP1, PP2, PP3);
- collect a first set (202) of input dublets (ID1, ID2), each input dublet (ID1, ID2) comprising a first value (ID1) and a second value (ID2), the first value (ID1) being a number of locators and the second value (ID2) being a distance between adjacent locators;
- for each input dublet of the first set, collect as input (203) to the trained artificial neural network the part parameters and said input dublet of the first set;
- for each input dublet of the first set, provide (204) an output dublet (OD1, OD2) predicted by the trained artificial neural network (ANN), the output dublet (OD1, OD2) comprising a first output value (OD1) and a second output value (OD2), the first output value (OD1) being a part deviation defined as a change of a part dimension from a nominal part dimension, and the second output value (OD2) being a part deflection defined as a change of a part form from a nominal part form, so that a second set of output dublets (OD1, OD2) is collected, each output dublet (OD1, OD2) of the second set resulting from an input dublet (ID1, ID2) of the first set;
- select (205) a selected output dublet (OD1, OD2) among the output dublets (OD1, OD2) of the second set, the selection (205) being based on an optimisation criteria, said selected output dublet (OD1, OD2) resulting from a determined input dublet (ID1, ID2) of the first set;
- determine (206) the target number of locators as the number of locators (ID1)of the determined input dublet (ID1, ID2), and determine (206bis) the target distance between adjacent locators as the distance between adjacent locators (ID2) of the determined input dublet (ID1, ID2).

## Description

### TECHNICAL FIELD

The disclosure relates generally to a method for fixing a part on a vehicle. In particular aspects, the disclosure relates to a method for determining a number and a position of locators required to fix a part on a fixture of a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

To assemble a part on a fixture on a vehicle, at least three primary locators are needed; but generally, for more stability, more than three locators are suggested. More locators increases the fixture cost, whereas less locators may reduce product quality.

A method is required to identify an optimum number of locators and an optimum distance between locators to give good quality and minimum cost.

### SUMMARY

According to a first aspect of the disclosure, the disclosure relates to a computer system comprising a processor device implementing a trained artificial neural network for determining a target number of locators and a target distance between adjacent locators placed on a part to fix the part on a fixture, the computer system being configured to:
- collect a part associated with part parameters;
- collect a first set of input dublets, each input dublet comprising a first value and a second value, the first value being a number of locators and the second value being a distance between adjacent locators;
- for each input dublet of the first set, collect as input to the trained artificial neural network the part parameters and said input dublet of the first set;
- for each input dublet of the first set, provide an output dublet predicted by the trained artificial neural network, the output dublet comprising a first output value and a second output value, the first output value being a part deviation defined as a change of a part dimension from a nominal part dimension, and the second output value being a part deflection defined as a change of a part form from a nominal part form, so that a second set of output dublets is collected, each output dublet of the second set resulting from an input dublet of the first set;
- select a selected output dublet among the output dublets of the second set, the selection being based on an optimisation criteria, said selected output dublet resulting from a determined input dublet of the first set;
- determine the target number of locators as the number of locators of the determined input dublet, and determine the target distance between adjacent locators as the distance between adjacent locators of the determined input dublet. The first aspect of the disclosure may seek to identify an optimum number of locators and an optimum distance between locators to give good quality and minimum cost. A technical benefit may include determining the optimum number of locators and the optimum distance between locators.

In some examples, part parameters comprise a surface area of the part, a thickness of the part, a Youngs modulus of the part.

In some examples, the selection based on the optimisation criteria comprises selecting the selected output dublet which minimises a function of the first output value and the second output value.

According to a second aspect of the disclosure, the disclosure relates to a computer-implemented method for determining a target number of locators and a target distance between adjacent locators placed on a part to fix the part on a fixture, the method being performed by a processor device of a computer system using a trained artificial neural network, and the method comprising:
- collect a part associated with part parameters;
- collect a first set of input dublets, each input dublet comprising a first value and a second value, the first value being a number of locators and the second value being a distance between adjacent locators;
- for each input dublet of the first set, collect as input to the trained artificial neural network the part parameters and said input dublet of the first set;
- for each input dublet of the first set, provide an output dublet predicted by the trained artificial neural network, the output dublet comprising a first output value and a second output value, the first output value being a part deviation defined as a change of a part dimension from a nominal part dimension, and the second output value being a part deflection defined as a change of a part form from a nominal part form, so that a second set of output dublets is provided, each output dublet of the second set resulting from an input dublet of the first set;
- select a selected output dublet among the output dublets of the second set, the selection being based on an optimisation criteria, said selected output dublet resulting from a determined input dublet of the first set;
- determine the target number of locators to be the number of locators of the determined input dublet, and determine the target distance between adjacent locators to be the distance between adjacent locators of the determined input dublet. The second aspect of the disclosure may seek to identify an optimum number of locators and an optimum distance between locators to give good quality and minimum cost. A technical benefit may include determining the optimum number of locators and the optimum distance between locators.

In some examples, part parameters comprise a surface area of the part, a thickness of the part, a Youngs modulus of the part.

In some examples, the selection based on the optimisation criteria comprises selecting the selected output dublet which minimises a function of the first output value and the second output value.

In some examples, the computer-implemented method further comprises a training phase of an artificial neural network to obtain the trained artificial neural network, the training phase comprising:
- provide a set of training parts, each training part having training part parameters;
- provide a set of testing parts, each testing part having testing part parameters;
- on at least one training part of the set of training parts, place locators according to a training input dublet, said training input dublet comprising a number of locators and a distance between adjacent locators;
- fix said at least one training part on the fixture, using the locators placed on said at least one training part according to the training input dublet;
- on the at least one training part fixed on the fixture with locators placed on the at least one training part according to the training input dublet, measure a corresponding training output dublet, the corresponding training output dublet comprising a measured training part deviation, and a measured training part deflection;
- provide to an input layer of the artificial neural network, the training part parameters of the at least one training part, and the training input dublet, and provide to an output layer of the artificial neural network, the corresponding training output dublet, internal parameters of a hidden layer the artificial neural network being configured to adjust so that a difference between a first term and a second term is less than a predetermined threshold,
wherein the first term is a first function of at least one predicted testing output dublet predicted by the artificial neural network with adjusted internal parameters, the at least one predicted testing output dublet being based on the testing part parameters of a testing part and on a testing input dublet, said testing input dublet comprising a testing number of locators and a testing distance between adjacent locators, and the second term is a second function of at least one corresponding measured testing output dublet measured on said testing part fixed on the fixture with locators placed on said testing part according to said testing input dublet.

In some examples, the predetermined threshold is comprised between 0% and 10%, preferably equal to 5%.

In some examples, the first function is an average of a plurality of predicted testing output dublet, the average of the plurality of predicted testing output dublet comprising a first average value and a second average value, the first average value being an average based on a first predicted output value of at least one predicted testing output dublet of the plurality of predicted testing output dublet, and the second average value being an average based on a second predicted output value of the at least one predicted testing output dublet of the plurality of predicted testing output dublet.

In some examples, the second function is an average of a plurality of corresponding measured testing output dublet, the average of the plurality of corresponding measured testing output dublet comprising a first average measured value and a second average measured value, the first average measured value being an average based on a testing part deviation measured on at least one testing part, and the second average measured value being an average based on a part deflection measured on said at least one testing part.

According to a second aspect of the disclosure, the disclosure relates to a computer program product comprising program code for performing, when executed by a processor device, the computer-implemented method according to the embodiments described above.

According to a second aspect of the disclosure, the disclosure relates to a non-transitory computer-readable storage medium comprising instructions, which when executed by a processor device, cause the processor device to perform the computer-implemented method according to the embodiments described above.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 is a schematic diagram of an exemplary computer system for implementing examples disclosed herein, according to one example.
FIG. 2 is a schematic diagram of an artificial neural network which may be implemented by the computer system of FIG. 1
FIG. 3 is a flow chart of an exemplary method for determining an optimum number of locators and an optimum distance between adjacent locators placed on a part to fix the part on a fixture according to one example.
FIG. 4 is a flow chart of an exemplary training phase of the method for determining an optimum number of locators and an optimum distance between adjacent locators placed on a part to fix the part on a fixture according to one example.

### DETAILED DESCRIPTION

Aspects set forth below represent the necessary information to enable those skilled in the art to practice the disclosure.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

To fix a part on a fixture of a vehicle, three locators are generally considered, more than three locators increases the fixture cost, whereas less locators may reduce product quality. The disclosure is related to a computer system 100 implementing a trained artificial neural network ANN, and a computer-implemented method 1000, for determining a target number of locators and a target distance between adjacent locators placed on a part to fix the part on a fixture, to give good quality, in terms of part deviation and deflection, and minimum cost.

Part deviation is herein defined as a change of a part dimension from a nominal part dimension, and part deflection is herein is defined as a change of a part form from a nominal part form.

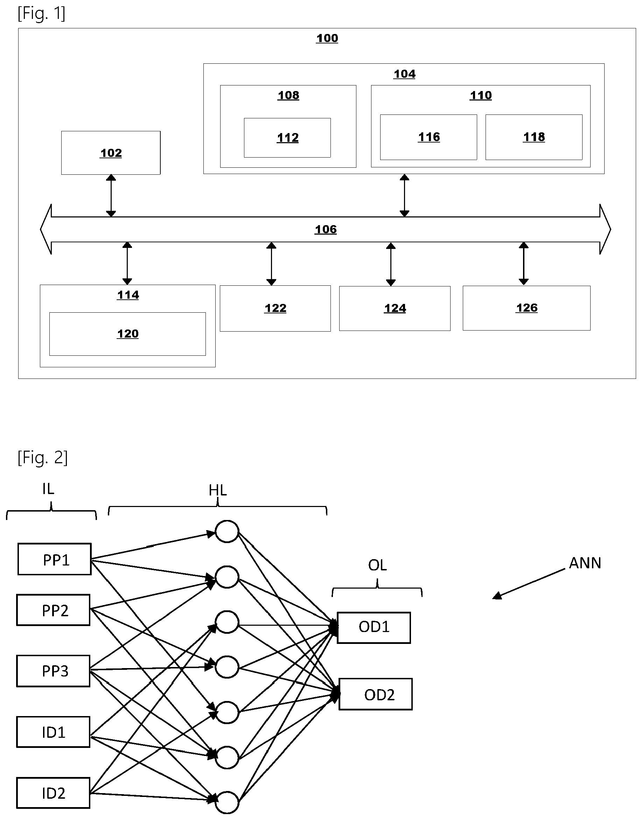

FIG. 1 is a schematic diagram of a computer system 100 for implementing examples disclosed herein. The computer system 100 is adapted to execute instructions from a computer-readable medium to perform these and/or any of the functions or processing described herein. The computer system 100 may be connected (e.g., networked) to other machines in a LAN, an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include a processor device 102 (may also be referred to as a control unit), a memory 104, and a system bus 106. The computer system 100 may include at least one computing device having the processor device 102. The system bus 106 provides an interface for system components including, but not limited to, the memory 104 and the processor device 102. The processor device 102 may include any number of hardware components for conducting data or signal processing or for executing computer code stored in memory 104. The processor device 102 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 106 may be any of several types of bus structures that may further interconnect to a memory bus (with or without a memory controller), a peripheral bus, and/or a local bus using any of a variety of bus architectures. The memory 104 may be one or more devices for storing data and/or computer code for completing or facilitating methods described herein. The memory 104 may include database components, object code components, script components, or other types of information structure for supporting the various activities herein. Any distributed or local memory device may be utilized with the systems and methods of this description. The memory 104 may be communicably connected to the processor device 102 (e.g., via a circuit or any other wired, wireless, or network connection) and may include computer code for executing one or more processes described herein. The memory 104 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)), or any other medium which can be used to carry or store desired program code in the form of machine-executable instructions or data structures and which can be accessed by a computer or other machine with a processor device 102. A basic input/output system (BIOS) 112 may be stored in the non-volatile memory 108 and can include the basic routines that help to transfer information between elements within the computer system 100.

The computer system 100 may further include or be coupled to a non-transitory computer-readable storage medium such as the storage device 114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 114 and/or in the volatile memory 110, which may include an operating system 116 and/or one or more program modules 118. All or a portion of the examples disclosed herein may be implemented as a computer program product 120 stored on a transitory or non-transitory computer-usable or computer-readable storage medium (e.g., single medium or multiple media), such as the storage device 114, which includes complex programming instructions (e.g., complex computer-readable program code) to cause the processor device 102 to carry out the steps described herein. Thus, the computer-readable program code can comprise software instructions for implementing the functionality of the examples described herein when executed by the processor device 102. The processor device 102 may serve as a controller or control system for the computer system 100 that is to implement the functionality described herein.

The computer system 100 also may include an input device interface 122 (e.g., input device interface and/or output device interface). The input device interface 122 may be configured to receive input and selections to be communicated to the computer system 100 when executing instructions, such as from a keyboard, mouse, touch-sensitive surface, etc. Such input devices may be connected to the processor device 102 through the input device interface 122 coupled to the system bus 106 but can be connected through other interfaces such as a parallel port, an Institute of Electrical and Electronic Engineers (IEEE) 1394 serial port, a Universal Serial Bus (USB) port, an IR interface, and the like. The computer system 100 may include an output device interface 124 configured to forward output, such as to a display, a video display unit (e.g., a liquid crystal display (LCD) or a cathode ray tube (CRT)). The computer system 100 may also include a communications interface 126 suitable for communicating with a network as appropriate or desired.

The computer system 100 may be configured to implement, in a way known from the man skilled in the art, an artificial neural network ANN, comprising an input layer IL, a hidden layer HL and an output layer OL. FIG. 2 is a schematic diagram of an artificial neural network ANN which may be implemented by the computer system 100.

The artificial neural network ANN may be trained to predict, on the output layer OL of the trained artificial neural network ANN, an output dublet OD1, OD2, the output dublet OD1, OD2 comprising a first output value OD1 and a second output value OD2; the first output value OD1 is the part deviation, defined herein above as a change of a part dimension from a nominal part dimension, and the second output value OD2 is the part deflection, defined herein above as a change of a part form from a nominal part form.

The output dublet OD1, OD2 is being predicted by the trained artificial neural network ANN based on input parameters PP1, PP2, PP3, ID1, ID2 collected by the computer system and provided as input to the artificial neural network ANN on the input layer IL of the trained artificial neural network ANN.

The input parameters PP1, PP2, PP3, ID1, ID2 are parameters associated with the part to be fixed on the fixture of the vehicle. The input parameters may comprise part parameters PP1, PP2, PP3 defining the part, such as for example a surface area PP1 of the part, a thickness PP2 of the part, a Youngs modulus PP3 of the part, the input parameters further comprising an input dublet ID1, ID2, comprising a first value ID1 and a second value ID2, the first value ID1 being a number of locators and the second value ID2 being a distance between adjacent locators. The part parameters PP1, PP2, PP3 defining the part have a fixed value for a given part, whereas the input dublet belong to a set of input dublets ID1, ID2, each input dublet ID1, ID2 being a target candidate to provide the target number of locators, and the target distance between the locators.

Thus for each input dublet ID 1, ID2 of the first set, an output dublet OD 1, OD2 is collected by the computer system 100 as output from the trained artificial neural network ANN based on the part parameters PP1, PP2, PP3 and on said input dublet ID1, ID2 of the first set. A second set of output dublets OD1, OD2 may thus be collected by the computer system 100 as output from the trained artificial neural network ANN, based on the first set of input dublets ID1, ID2.

An output dublet OD 1, OD2 may then be selected among the output dublets OD1, OD2 of the second set, the selection being based on an optimisation criteria, said selected output dublet OD1, OD2 resulting from a determined input dublet ID1, ID2 of the first set;

The target number of locators may then be determined as the number of locators of the determined input dublet ID1, ID2, and the target distance between adjacent locators may be determined as the distance between adjacent locators of the determined input dublet ID 1, ID2.

The selection based on the optimisation criteria may comprise, for example, selecting the selected output dublet OD1, OD2 which minimises a function of the first output value and the second output value. For example, the function of the first output value and the second output value may be a mean squared value of the first output value and the second output value.

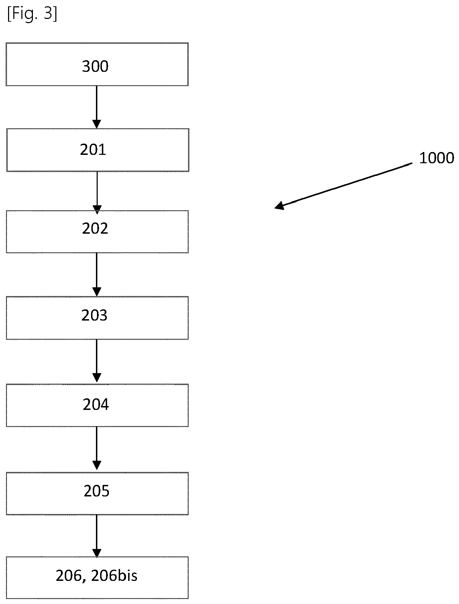

In reference to FIG. 3, another aspect of the disclosure will be described, relating to a computer-implemented method 1000 for determining a target number of locators and a target distance between adjacent locators placed on a part to fix the part on a fixture; the method 1000 may be performed by the processor device 102 of the computer system 100, using a trained artificial neural network ANN, wherein the method 1000 comprises the following steps performed by the computer system 100 :
- collect a part 201, the part being associated with part parameters PP1, PP2, PP3;
- collect a first set 202 of input dublets ID1, ID2, each input dublet ID1, ID2 comprising a first value and a second value, the first value ID1 being a number of locators and the second value ID2 being a distance between adjacent locators;
- for each input dublet ID1, ID2 of the first set, collect and provide as input 203 to the trained artificial neural network the part parameters PP1, PP2, PP3 and said input dublet ID1, ID2 of the first set;
- for each input dublet ID1, ID2 of the first set, provide 204 an output dublet OD1, OD2, predicted by the trained artificial neural network ANN, the output dublet OD1, OD2 comprising a first output value OD1 and a second output value OD2, the first output value OD1 being a part deviation defined as a change of a part dimension from a nominal part dimension, and the second output value OD2 being a part deflection defined as a change of a part form from a nominal part form, so that a second set of output dublets OD1, OD2 is provided, each output dublet OD1, OD2 of the second set resulting from an input dublet of the first set;
- select 205 a selected output dublet OD1, OD2 among the output dublets OD1, OD2 of the second set, the selection being based on an optimisation criteria, said selected output dublet OD1, OD2 resulting from a determined input dublet ID1, ID2 of the first set;
- determine 206 the target number of locators to be the number of locators of the determined input dublet ID1, ID2, and determine 206bis the target distance between adjacent locators to be the distance between adjacent locators of the determined input dublet ID1, ID2.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

According to a further aspect of the disclosure, the disclosure relates to a training phase 300 of the method 1000.

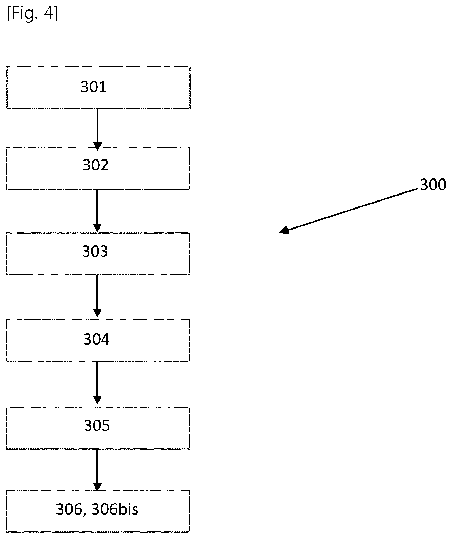

FIG. 4 is a flow chart of an exemplary training phase 300 of the method 1000 which will now be described. The training phase 300 may comprise the following steps :
- provide 301 a set of training parts, each training part having training part parameters PP1, PP2, PP3;
- provide 302 a set of testing parts, each testing part having testing part parameters PP1, PP2, PP3;
- on the training parts of the set of training parts, place 303 locators according to a training input dublet ID1, ID2, said training input dublet ID1, ID2 comprising a number of locators ID1 and a distance ID2 between adjacent locators; in other words, the step of placing 303 locators, according to a training input dublet ID1, ID2, on the training part, consists in placing the number of locators ID1 on said training part, so that the distance between adjacent locators is distance ID2 between adjacent locators of said training input dublet ID1, ID2.
- fix 304 said training part on the fixture, using the locators placed on said training part;
- on the training part fixed on the fixture with locators placed according to the training input dublet ID1, ID2, measure 305 a corresponding training output dublet OD1, OD2, the corresponding training output dublet OD1, OD2, comprising a measured training part deviation, and a measured training part deflection;
- provide 306, to the input layer II, of the artificial neural network ANN, the training part parameters PP1, PP2, PP3 of the training part, and the training input dublet ID1, ID2, and provide 306bis to the output layer OL of the artificial neural network ANN, the corresponding measured training output dublet OD1, OD2; in a way known from the man skilled in the art, internal parameters of the hidden layer HL of the artificial neural network ANN are configured to adjust so that a difference between a first term and a second term is reduced each time this step is performed with a new training part from the set of training parts, until this difference between a first term and a second term becomes less than a predetermined threshold.

For example, the first term may be a first function of a predicted testing output dublet OD1, OD2 predicted by the artificial neural network with adjusted internal parameters, the predicted testing output dublet OD1, OD2 being predicted based on testing part parameters PP1, PP2, PP3, of the testing part, and on a testing input dublet ID1, ID2, said testing input dublet ID1, ID2 comprising a testing number of locators and a testing distance between adjacent locators placed on the testing part, and the second term may be a second function of a corresponding measured testing output dublet, measured on said testing part fixed on the fixture with locators placed on said testing part according to said testing input dublet ID1, ID2.

The predetermined threshold may be comprised between 0% and 10%, preferably equal to 5%. The first function may be, for example, an average of a plurality of predicted testing output dublets, the average comprising a first average value and a second average value, the first average value being an average based on the first predicted output values OD1 of the predicted testing output dublets, OD1, OD2, and the second average value being an average based on the second predicted output values OD2 of the predicted testing output dublets OD1, OD2.

The second function may be, for example, an average of a plurality of corresponding measured testing output dublets, the average comprising a first average measured value and a second average measured value, the first average measured value being an average based on a testing part deviation measured on testing parts, and the second average measured value being an average based on a part deflection measured on said testing parts.

A further aspect of the disclosure relate to a computer program product comprising program code for performing, when executed by a processor device 102, the computer-implemented method 1000, according to any of the embodiments described above, for determining a target number of locators and a target distance between adjacent locators placed on a part to fix the part on a fixture; a further aspect of the disclosure also relates to a non-transitory computer-readable storage medium comprising instructions, which when executed by a processor device 102, cause the processor device 102 to perform the computer-implemented method 1000, according to any of the embodiments described above, for determining a target number of locators and a target distance between adjacent locators placed on a part to fix the part on a fixture.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (100) comprising a processor device (102) implementing a trained artificial neural network (ANN) for determining a target number of locators and a target distance between adjacent locators placed on a part to fix the part on a fixture, the computer system (100) being configured to:
- collect a part (201) associated with part parameters (PP1, PP2, PP3);
- collect a first set (202) of input dublets (ID1, ID2), each input dublet (ID1, ID2) comprising a first value (ID1) and a second value (ID2), the first value (ID1) being a number of locators and the second value (ID2) being a distance between adjacent locators;
- for each input dublet of the first set, collect as input (203) to the trained artificial neural network the part parameters and said input dublet of the first set;
- for each input dublet of the first set, provide (204) an output dublet (OD1, OD2) predicted by the trained artificial neural network (ANN), the output dublet (OD1, OD2) comprising a first output value (OD1) and a second output value (OD2), the first output value (OD1) being a part deviation defined as a change of a part dimension from a nominal part dimension, and the second output value (OD2) being a part deflection defined as a change of a part form from a nominal part form, so that a second set of output dublets (OD1, OD2) is collected, each output dublet (OD1, OD2) of the second set resulting from an input dublet (ID1, ID2) of the first set;
- select (205) a selected output dublet (OD1, OD2) among the output dublets (OD1, OD2) of the second set, the selection (205) being based on an optimisation criteria, said selected output dublet (OD1, OD2) resulting from a determined input dublet (ID1, ID2) of the first set;
- determine (206) the target number of locators as the number of locators (ID1)of the determined input dublet (ID1, ID2), and determine (206bis) the target distance between adjacent locators as the distance between adjacent locators (ID2) of the determined input dublet (ID1, ID2).

2. A computer system (100) of claim 1, wherein part parameters (PP1, PP2, PP3) comprise a surface area (PP1) of the part, a thickness (PP2) of the part, a Youngs modulus (PP3) of the part.

3. A computer system (100) of claim 1 or 2, wherein the selection (205) based on the optimisation criteria comprises selecting the selected output dublet which minimises a function of the first output value and the second output value.

4. A computer-implemented method (1000) for determining a target number of locators and a target distance between adjacent locators placed on a part to fix the part on a fixture, the method being performed by a processor device (102) of a computer system (100) using a trained artificial neural network (ANN), and the method (1000) comprising:
- collect (201) a part associated with part parameters (PP1, PP2, PP3);
- collect (202) a first set of input dublets (ID1, ID2), each input dublet (ID1, ID2) comprising a first value (ID1) and a second value (ID2), the first value (ID1) being a number of locators and the second value (ID2) being a distance between adjacent locators;
- for each input dublet (ID1, ID2) of the first set, collect (203) as input to the trained artificial neural network (ANN) the part parameters (PP1, PP2, PP3) and said input dublet (ID1, ID2) of the first set;
- for each input dublet (ID1, ID2) of the first set, provide (204) an output dublet (OD1, OD2) predicted by the trained artificial neural network (ANN), the output dublet (OD1, OD2) comprising a first output value (OD1) and a second output value (OD2), the first output value (OD1) being a part deviation defined as a change of a part dimension from a nominal part dimension, and the second output value (OD2) being a part deflection defined as a change of a part form from a nominal part form, so that a second set of output dublets (OD1, OD2) is provided, each output dublet (OD1, OD2) of the second set resulting from an input dublet (ID1, ID2) of the first set;
- select (205) a selected output dublet (OD1, OD2) among the output dublets (OD1, OD2) of the second set, the selection (205) being based on an optimisation criteria, said selected output dublet (OD1, OD2) resulting from a determined input dublet (ID1, ID2) of the first set;
- determine (206) the target number of locators to be the number of locators (ID1) of the determined input dublet (ID1, ID2), and determine (206bis) the target distance between adjacent locators to be the distance between adjacent locators (ID2) of the determined input dublet (ID1, ID2).

5. The method (1000) of claim 4, wherein part parameters (PP1, PP2, PP3) comprise a surface area (PP1) of the part, a thickness (PP2) of the part, a Youngs modulus (PP3) of the part.

6. The method (1000) of claim 4 or 5, wherein the selection (205) based on the optimisation criteria comprises selecting the selected output dublet (OD1, OD2) which minimises a function of the first output value (OD1) and the second output value (OD2).

7. The method (1000) of claim 4 to 6, further comprising a training phase (300) of an artificial neural network to obtain the trained artificial neural network, the training phase (300) comprising:
- provide (301) a set of training parts, each training part having training part parameters (PP1, PP2, PP3);
- provide (302) a set of testing parts, each testing part having testing part parameters (PP1, PP2, PP3);
- on at least one training part of the set of training parts, place (303) locators according to a training input dublet (ID1, ID2), said training input dublet (ID1, ID2) comprising a number of locators and a distance between adjacent locators;
- fix (304) said at least one training part on the fixture, using the locators placed on said at least one training part according to the training input dublet (ID1, ID2);
- on the at least one training part fixed on the fixture with locators placed on the at least one training part according to the training input dublet (ID1, ID2), measure (305) a corresponding training output dublet (OD1, OD2), the corresponding training output dublet (OD1, OD2) comprising a measured training part deviation (OD1), and a measured training part deflection (OD2);
- provide (306) to an input layer (IL) of the artificial neural network (ANN), the training part parameters (PP1, PP2, PP3) of the at least one training part, and the training input dublet (ID1, ID2), and provide (306bis) to an output layer (OL) of the artificial neural network (ANN), the corresponding training output dublet (OD1, OD2), internal parameters of a hidden layer (HL) the artificial neural network (ANN) being configured to adjust so that a difference between a first term and a second term is less than a predetermined threshold,
wherein the first term is a first function of at least one predicted testing output dublet predicted by the artificial neural network with adjusted internal parameters, the at least one predicted testing output dublet being based on the testing part parameters of a testing part and on a testing input dublet, said testing input dublet comprising a testing number of locators and a testing distance between adjacent locators, and the second term is a second function of at least one corresponding measured testing output dublet measured on said testing part fixed on the fixture with locators placed on said testing part according to said testing input dublet.

8. The method (1000) of claim 7, wherein the predetermined threshold is comprised between 0% and 10%, preferably equal to 5%.

9. The method (1000) of claim 7 or 8, wherein the first function is an average of a plurality of predicted testing output dublet, the average of the plurality of predicted testing output dublet comprising a first average value and a second average value, the first average value being an average based on a first predicted output value of at least one predicted testing output dublet of the plurality of predicted testing output dublet, and the second average value being an average based on a second predicted output value of the at least one predicted testing output dublet of the plurality of predicted testing output dublet.

10. The method (1000) of claim 7 to 9, wherein the second function is an average of a plurality of corresponding measured testing output dublet, the average of the plurality of corresponding measured testing output dublet comprising a first average measured value and a second average measured value, the first average measured value being an average based on a testing part deviation measured on at least one testing part, and the second average measured value being an average based on a part deflection measured on said at least one testing part.

11. A computer program product comprising program code for performing, when executed by a processor device (102), the computer-implemented method of any of claims 4 to 6.

12. A non-transitory computer-readable storage medium comprising instructions, which when executed by a processor device (102), cause the processor device (102) to perform the computer-implemented method of any of claims 4 to 6.

## Amended claims

### Amended claims in accordance with Rule 137(2) EPC.

1. A computer system (100) comprising a processor device (102) implementing a trained artificial neural network (ANN) for determining a target number of locators and a target distance between adjacent locators placed on a part to fix the part on a fixture, the computer system (100) being configured to:
- collect, from a memory (104) of the computer system, part parameters (PP1, PP2, PP3) associated with a part (201), part parameters (PP1, PP2, PP3) comprising a surface area (PP1) of the part, a thickness (PP2) of the part, a Youngs modulus (PP3) of the part (201);
- collect a first set (202) of input dublets (ID1, ID2), each input dublet (ID1, ID2) comprising a first value (ID1) and a second value (ID2), the first value (ID1) being a number of locators and the second value (ID2) being a distance between adjacent locators;
- for each input dublet of the first set, collect as input (203) to the trained artificial neural network the part parameters and said input dublet of the first set;
- for each input dublet of the first set, provide (204) an output dublet (OD1, OD2) predicted by the trained artificial neural network (ANN), the output dublet (OD1, OD2) comprising a first output value (OD1) and a second output value (OD2), the first output value (OD1) being a part deviation defined as a change of a part dimension from a nominal part dimension, and the second output value (OD2) being a part deflection defined as a change of a part form from a nominal part form, so that a second set of output dublets (OD1, OD2) is collected, each output dublet (OD1, OD2) of the second set resulting from an input dublet (ID1, ID2) of the first set;
- select (205) a selected output dublet (OD1, OD2) among the output dublets (OD1, OD2) of the second set, the selection (205) being based on an optimisation criteria, said selected output dublet (OD1, OD2) resulting from a determined input dublet (ID1, ID2) of the first set, wherein the selection (205) based on the optimisation criteria comprises selecting the selected output dublet which minimises a function of the first output value and the second output value;
- determine (206) the target number of locators as the number of locators (ID1) of the determined input dublet (ID1, ID2), and determine (206bis) the target distance between adjacent locators as the distance between adjacent locators (ID2) of the determined input dublet (ID1, ID2).

2. A computer-implemented method (1000) for determining a target number of locators and a target distance between adjacent locators placed on a part to fix the part on a fixture, the method being performed by a processor device (102) of a computer system (100) using a trained artificial neural network (ANN), and the method (1000) comprising:
- collect (201), from a memory (104) of the computer system, part parameters (PP1, PP2, PP3) associated with a part (201), part parameters (PP1, PP2, PP3) comprising a surface area (PP1) of the part, a thickness (PP2) of the part, a Youngs modulus (PP3) of the part (201);
- collect (202) a first set of input dublets (ID1, ID2), each input dublet (ID1, ID2) comprising a first value (ID1) and a second value (ID2), the first value (ID1) being a number of locators and the second value (ID2) being a distance between adjacent locators;
- for each input dublet (ID1, ID2) of the first set, collect (203) as input to the trained artificial neural network (ANN) the part parameters (PP1, PP2, PP3) and said input dublet (ID1, ID2) of the first set;
- for each input dublet (ID1, ID2) of the first set, provide (204) an output dublet (OD1, OD2) predicted by the trained artificial neural network (ANN), the output dublet (OD1, OD2) comprising a first output value (OD1) and a second output value (OD2), the first output value (OD1) being a part deviation defined as a change of a part dimension from a nominal part dimension, and the second output value (OD2) being a part deflection defined as a change of a part form from a nominal part form, so that a second set of output dublets (OD1, OD2) is provided, each output dublet (OD1, OD2) of the second set resulting from an input dublet (ID1, ID2) of the first set;
- select (205) a selected output dublet (OD1, OD2) among the output dublets (OD1, OD2) of the second set, the selection (205) being based on an optimisation criteria, said selected output dublet (OD1, OD2) resulting from a determined input dublet (ID1, ID2) of the first set, wherein the selection (205) based on the optimisation criteria comprises selecting the selected output dublet (OD1, OD2) which minimises a function of the first output value (OD1) and the second output value (OD2);
- determine (206) the target number of locators to be the number of locators (ID1) of the determined input dublet (ID1, ID2), and determine (206bis) the target distance between adjacent locators to be the distance between adjacent locators (ID2) of the determined input dublet (ID1, ID2),
wherein the method (1000), further comprises a training phase (300) of the artificial neural network to obtain the trained artificial neural network, the training phase (300) comprising:
- provide (301) a set of training parts, each training part having training part parameters (PP1, PP2, PP3);
- on at least one training part of the set of training parts, place (303) locators according to a training input dublet (ID1, ID2), said training input dublet (ID1, ID2) comprising a number of locators and a distance between adjacent locators;
- fix (304) said at least one training part on the fixture, using the locators placed on said at least one training part according to the training input dublet (ID1, ID2);
- on the at least one training part fixed on the fixture with locators placed on the at least one training part according to the training input dublet (ID1, ID2), measure (305) a corresponding training output dublet (OD1, OD2), the corresponding training output dublet (OD1, OD2) comprising a measured training part deviation (OD1), and a measured training part deflection (OD2);
- provide (306) to an input layer (IL) of the artificial neural network (ANN), the training part parameters (PP 1, PP2, PP3) of the at least one training part, and the training input dublet (ID1, ID2), and provide (306bis) to an output layer (OL) of the artificial neural network (ANN), the corresponding training output dublet (OD1, OD2), internal parameters of a hidden layer (HL) the artificial neural network (ANN) being configured to adjust so that a difference between a first term and a second term is less than a predetermined threshold.

3. The method (1000) of claim 2, wherein the training phase further comprises the following step:
- provide (302) a set of testing parts, each testing part having testing part parameters (PP1, PP2, PP3);
and wherein the first term is a first function of at least one predicted testing output dublet predicted by the artificial neural network with adjusted internal parameters, the at least one predicted testing output dublet being based on the testing part parameters of a testing part and on a testing input dublet, said testing input dublet comprising a testing number of locators and a testing distance between adjacent locators, and the second term is a second function of at least one corresponding measured testing output dublet measured on said testing part fixed on the fixture with locators placed on said testing part according to said testing input dublet.

4. The method (1000) of anyone of claims 2 to 3, wherein the predetermined threshold is comprised between 0% and 10%, preferably equal to 5%.

5. The method (1000) of claim 2 or 4, wherein the first function is an average of a plurality of predicted testing output dublet, the average of the plurality of predicted testing output dublet comprising a first average value and a second average value, the first average value being an average based on a first predicted output value of at least one predicted testing output dublet of the plurality of predicted testing output dublet, and the second average value being an average based on a second predicted output value of the at least one predicted testing output dublet of the plurality of predicted testing output dublet.

6. The method (1000) of claim 2 to 5, wherein the second function is an average of a plurality of corresponding measured testing output dublet, the average of the plurality of corresponding measured testing output dublet comprising a first average measured value and a second average measured value, the first average measured value being an average based on a testing part deviation measured on at least one testing part, and the second average measured value being an average based on a part deflection measured on said at least one testing part.

7. A computer program product comprising program code for performing, when executed by a processor device (102), the computer-implemented method of any of claims 2 to 6.

8. A non-transitory computer-readable storage medium comprising instructions, which when executed by a processor device (102), cause the processor device (102) to perform the computer-implemented method of any of claims 2 to 6.
